(19) **Europäisches Patentamt**

**European Patent Office**

**Office européen des brevets**

(11) **EP 1 132 851 A2**

(12) **EUROPEAN PATENT APPLICATION**

(43) Date of publication:
**12.09.2001 Bulletin 2001/37**

(51) Int Cl.[7]: **G06K 9/62**, G06T 7/00

(21) Application number: **01302090.4**

(22) Date of filing: **07.03.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **10.03.2000 GB 0005881**<br><br>(71) Applicant: **Surface Inspection Limited Bristol BS2 OJZ (GB)** | (72) Inventor: **Coulthard, Martin**<br>**Bristol BS2 0JE (GB)**<br><br>(74) Representative: **Beck, Simon Antony et al**<br>**Withers & Rogers,**<br>**Goldings House,**<br>**2 Hays Lane**<br>**London SE1 2HW (GB)** |

(54) **A classification space packing scheme, and an inspection apparatus using the classification method**

(57) A method is provided for classifying objects within a measurement space. It is desirable that an observable property for an object should not vary widely for objects that belong to the same class or grade. This can lead to the creating of an excessive number of classes to describe all of the objects produced in a manufacturing process where process characteristics may vary over time. The present invention describes a classification scheme where classes, and hence class boundaries, can be moved in the measurement space to minimise the need to create new classes.

Fig.8.

EP 1 132 851 A2

**Description**

The present invention relates to a method of classifying objects, an apparatus for classifying objects, a method of optimising the shape of classification "volumes" within a multidimensional measurement space and to an inspection system for classifying objects.

For most manufacturing processes, it is desirable to achieve consistency between objects produced by the process. However, processes are by their very nature variable and this can result in variations between objects. For manufacturing processes used on a continuous basis, the properties of the products may vary gradually over time. However, the manufacturing processes used on a discreet batch basis may make it difficult to replicate the properties of the product from one batch to another.

These problems can be significant in the area of appearance matching, for example in the production of ceramic wall and floor tiles, which may be coloured and may include a pattern.

A tile may have a number of measurable appearance properties, for example it has a colour, the colour has a saturation and a lightness, the surface may be glossy or matt, there may be a roughness to the surface and the surface may be decorated. A decorated surface requires multiple measurements to be made over the surface to determine that the decoration thereon is in conformity with the design or specification of that tile.

The appearance of the tile can vary as the result of many of the manufacturing processes, for example variables include the material colours, the quantity and quality of mixing of the pigments, a wide range of printing and other decoration effects, and the firing conditions.

A manufacturer is only able to achieve the ideal situation of a single appearance for each product if he can control all of these processing variables extremely well. However, due to the nature of the process, with the use of natural materials, intentionally variable decoration effects and high temperature firing, it is usually not possible to guarantee that the entire production run is of only a single appearance. Furthermore it may be necessary to replicate that appearance time after time. Even if it is possible to control the production process sufficiently accurately to replicate the desired appearance consistently, the investment in the processing and the quality control machinery may be too great to be economically viable.

In order to overcome this problem, manufacturers seek to divide the product into different appearance classes hereinafter classes or in the context of tile inspection "shades", where each class includes only those tiles which are sufficiently similar to one another to be acceptable to the customer. However this results in a number of problems. Namely:

- Quality control and inspection managers find it hard to establish and control the shades.

- Manual inspectors do not give consistent, accurate appearance decisions against the established shades.

Tiles within the same shade may have too large a visible difference. This may be due to incorrect inspection or to defining the acceptable range of appearances within a shade too widely. This may lead to customer returns of the product, thereby damaging the manufacturer's reputation for quality.

However, if there may be many different shades, this gives rise to high costs for storage, distribution and sales. If during inspection too many tiles appear not to fall within the current set of shades, either the tiles have to be discarded or a new shade has to be defined.

Any classification scheme implemented in respect of classifying products, and in this case tiles, should strike a balance between maintaining customer satisfaction which requires that the distribution of appearance in any class is not too great; minimising the different number of classes; and being clear and reproducible.

One of the major criteria affecting a classification scheme is whether the manufacturer needs to be able to match characteristics from batch to batch, ie in this example whether or not he needs to be able to match shades from batch to batch.

If the manufacturer does need to match shades between batches, then he must establish and manage a system of fixed classes, ie fixed shades for each product. However, if he does not need to match shades from batch to batch then he can create new shades in each production run for his products and can afford to do so during the production run if and when a new shade is needed. If a manufacturer chooses to implement a fixed class scheme, this enables the manufacturer to add tiles of a given shade from one production run to tiles of the same shade of a previous run and thereby build-up saleable quantities. As a result less production is wasted due to unsaleable small quantities of tiles of a given shade. This may be preferred by customers as they can also use or resell tiles of the same shade together.

If a manufacturer chooses to have new shades on each production run, this has the advantage that fewer different shades are required on each run, no storage is required for small quantities of tiles of a given shade as these can be downgraded to a lower quality category or scrapped and small quantities of tiles of a given shade are less likely using this approach than using the fixed shade classification scheme.

It is worth considering how shade can be measured, so as to understand the multi-dimension and nature of the problem.

Appearance measurement systems take objective measurements which are used to describe the appearance of an object. Typically a tile inspection apparatus will illuminate a tile surface with one or more light sources of controlled intensity and colour. Light reflected from the surface tile is then captured by at least one camera or other sensor, and the output of the or each camera or sensor is analysed by a data processor. In the context of a tile shade classification measurement, the measurement should measure an appearance variation which is clearly visible to the human eye and in a way that correlates with human perception. It should give reliable and repeatable measurements, it should measure shade variations which occur or could occur during the production of the tile and should preferably be proportional to human perception such that, for example, a change of one arbitrary unit as measured by the machine should be relatible to an agreed change as observed by a human. This may require a co-ordinate mapping scheme to be implemented to convert between machine measurements and a scale of human perception since, in general, human senses are not linear. "Linear" in this context, is meant to imply that an change of one arbitrary unit in one of the parameters looks the same irrespective of where the starting point for that change was within the measurement space. Thus for example, the amount of arbitrary change should look to be the same amount of change, irrespective of whether a tile is red or blue, light or dark.

In addition to the above considerations, the set of appearance measurements selected for shade classification of a product should be able to detect and measure all appearance variations that would or could occur; the measurements should preferably be orthogonal to each other; and preferably the measurement space should be isotropic, however, it will be appreciated that some of the requirements, such as orthogonality and the need to be isotropic may be relaxed provided that the measurements are consistent and reproducible.

As noted hereinabove, human perception can be non-linear. However, the responses of expert human inspectors can be assessed alongside the responses of a machine vision system. It is then possible to map from the actual measurement to a desired measurement system if necessary.

The science of colour measurement has been extensively studied and this has resulted in various schemes for classifying colours such that they can be described and reproduced in a consistent and reliable way. Researchers have found the we can define colour using three parameters.

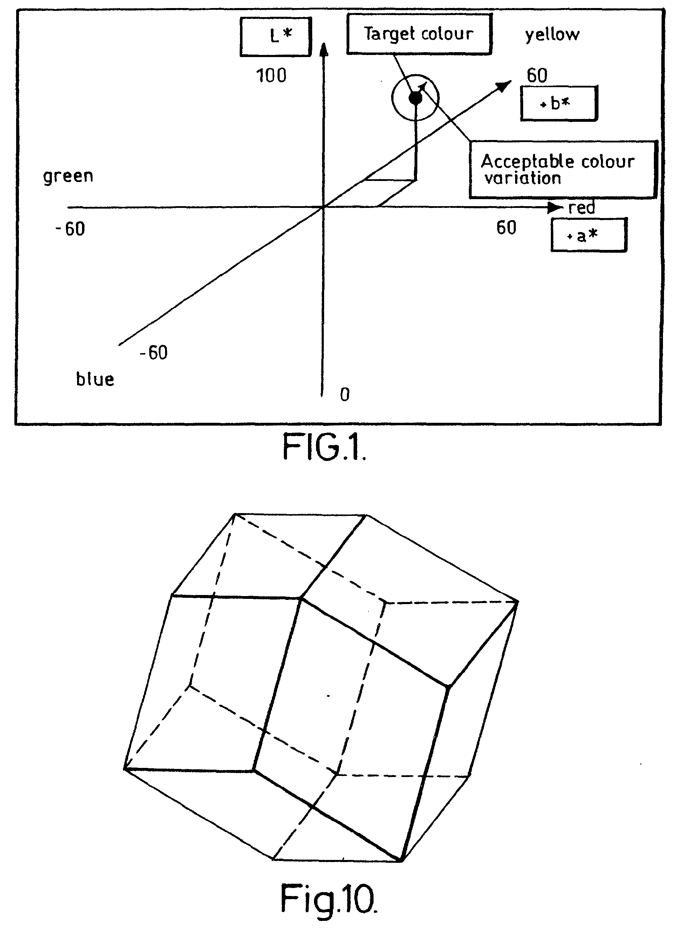

One system of colour measurement is the CIELAB colour space system illustrated in Figure 1. In this system, lightness, $L^*$, which is a measure of how bright a colour is, is plotted against the vertical axis. Two further measurements $a^*$ and $b^*$ are defined as linear axes with $a^*$ defining the colour from a red to green scale, and the $b^*$ axis indicating colour on a blue to yellow scale.

The measurements $a^*$ and $b^*$ are in the horizontal colour plane and are perpendicular to each other such that this colour system defines an orthogonal cartesian space. Each of the $L^*$, $a^*$ and $b^*$ axes are defined in such a way that one unit on any of the scales has about the same visibility, making this system both a linear and isotropic. This system therefore meets the requirement for shade measurement described hereinabove. The $L^*$ axis has a scale from 0 (black) to 100 (white) whilst the $a^*$ and $b^*$ scales range from -60 to +60 each.

This classification scheme has the advantage that the differences between colours can be calculated easily. If a first colour C1 has co-ordinates L1, a1 and b1, and a second colour C2 has colour co-ordinates L2, a2 and b2, then the magnitude of the colour difference ΔE is the Euclidean distance between the two points in the colour space.

$$\triangle E=((L1-L2)^2 + (a1-a2)^2 + (b1-b2)^2)^{\frac{1}{2}}$$

The colour difference measurement, ΔE, of one unit has substantially the same visibility at any part of the colour space.

The system has the advantage that a manufacturer can specify a target colour and a volume surrounding the target colour which represents a space in which variations of colour are acceptable.

As the measurement system is standardised, both the manufacturer and supplier can define what the colour is, and check using standard instruments whether or not the specification is being met.

This system can be applied to tiles and for uniform, plain coloured tiles it can give an effective system of shade control. However other visible characteristics of the tile may also be considered and measured, for example the glossiness of the tile.

In general, tiles are not uniform and plain. They have a wide range of decoration types including silk screen printing, rotary printing, spray and mixed materials to give speckles or blobs. Thus while the average $L^*$, $a^*$ and $b^*$ values for the tile surface are often useful appearance measurements they are rarely sufficient to fully define the appearance of the tile, and consequently other measurements are also required thereby creating an even more complex measurement space.

Thus the measurement space may need further dimensions to accommodate the geometric distribution of colours on decorated tiles. The measurement space may also need enlargement to cover the reflectivity at the tile surface. Variations in the shininess of the surface are likely to be noticed by customers. If one or more tiles in a batch has a much lower gloss than the others, and they are laid in an array, then these tiles will look clearly different and may be rejected by the customer. In some cases variations in the texture of the surface are also perceivable and should therefore be measured.

Thus an effective classification and inspection system for tiles should be able to include the above mentioned features in addition to the tile's colour.

According to a first aspect of the present invention, there is provided a method of object classification so as to sort objects into classes, the method comprising the steps of:

1. Making a measurement or assessment of at least one property of an object;

2. Representing the measurement within a measurement space;

3. Assigning the object to a first class;

4. Defining a volume in the measurement space associated with the first class such that objects falling within the volume can be identified as belonging to the first class;

5. Making at least one further measurement of a further object;

6. Representing the at least one further measurement within the measurement space; and

7. If the further measurement falls outside of the first class, examining the position of the first class in the measurement space to see if moving the position of the first class within the measurement space will increase the number of objects belonging to the first class.

It is thus possible to provide a method of classification which seeks to minimise the number of classes which have to allocated in order to cover a plurality of objects.

Preferably steps 5, 6 and 7 may be repeated.

As used herein, the movement of the or each Class may be translational and/or rotational.

The classes may be absolute, thereby ensuring long term conformity, or may be short term classes which may be allowed to drift slowly with time. Thus absolute classes are fixed within the measurement space, whereas short term classes can be mobile.

For an absolute system, the boundaries or envelopes defining the edges of the classes may become fixed with the increasing number of classes. This can be seen intuitively since moving the position of one class to maximise the number of objects within it causes the boundaries of other classes to move which may therefore cause objects which were previously within these other classes to move outside them. Since large scale reclassification of already classified objects is clearly undesirable, the classes tend to become static. Once a user is satisfied that the evolution of the classification scheme has slowed, the user can opt to fix the positions of the classes within the classification space.

However, it is also possible to allow individual classes to move whilst leaving the others static since it is permissible to define overlapping classes and the degree of overlap can be altered. In general, the positions of all of the classes becomes fixed once the number of classes that has been defined becomes equal to the number of dimensions in the multidimensional space.

Preferably the "shape" of the classes within the measurement space is optimised to reduce the number of groups required to fill a region of the measurement space.

The classification volumes may be multidimensional expressions of relatively simple geometric shapes. Thus, for example, the "shape" of the classification volume when viewed in any two dimensions may be circular, being a projection of a hypersphere in an n-dimensional space. This guarantees that no two shade points within this volume which represents one class are more than a given distance apart, equal to the diameter of the sphere.

Advantageously the or each measurement of an object is recorded in the measurement space in order to build up a scatter pattern representing the distribution of the objects. Given the variability and complexity of the manufacturing process, some variables may be far more stable than others and this means that the scatter pattern may not be circularly symmetric around a centre point but may become elongate when viewed in certain two dimensional views of the measurement space, or may become generally threadlike when viewed in a three dimensional representation of the measurement space.

Furthermore, the scatter may be skewed in one or more directions within the measurement space. These possibilities mean that it may be possible to move the centre of the class volume within the measurement space in order to encompass all of the objects measured to date. This ability to adapt the position of the class volumes within the measurement space, rather than keeping them static and having to open a new class as soon as an object falls outside of the first class volume is key to minimising the number of classes whilst maintaining quality of the product since the size of the class volume remains unaltered in the measurement space.

Advantageously the method is used to classify visually inspectable objects, such as tiles.

Multiple measurements may be made at different regions of the or each tile so as to check that the pattern (if any) printed on the tile is correct to within the predetermined margins of variation.

The classification volumes within the measurement space need not be hyper-spheres and may, when viewed in selective measurement planes, display square, triangular, hexagonal, octagonal or rectangular features. However, it is highly desirable that the volumes of the classes pack in an efficient manner within the measurement space and do not leave voids between them.

The boundaries of the classification volumes associated with a class may be formed by intersecting hyper-planes defined in each one of the dimensions. Alternatively, the shapes of the classes may be grown by defining the centre positions of a plurality of classes and allowing the envelope of each class to grow towards its nearest neighbours until the envelopes abut. Once a portion of the envelope abuts the envelope of a neighbouring class, the position of that portion becomes fixed but the remainder of envelope surface of which that portion forms part may continue to grow until the entirety of the envelope surface is touching the surfaces of one or more classification volumes. This method allows more complex multidimensional shapes to be defined.

The class volumes need not be defined by "solid" boundaries. Instead, a probability function may be defined, wherein the probability of a point belonging to one class decreases with increasing distance from the centre of the class. Thus for any point in space, an analysis may be made to determine which of the nearest classes the object is most likely to belong to. The probability distribution function can be tailored at will and need not follow a simple mathematical model, such as the Gaussian distribution. Thus the class volume may be defined as having a hard interior with fuzzy edges.

According to a second aspect of the present invention, there is provided a measurement apparatus comprising at least one input sensor for measuring at least one property of the object, and a data processing means responsive to the at least one sensor for classifying the object in accordance with the method of the first aspect of the invention

According to a third aspect of the present invention there is provided a method of packing classification volumes in a multidimensional space so as to minimise the number of volumes required the whilst minimising the formation of voids between volumes, comprising the steps of defining a multidimensional space and a maximum permissible change of a parameter which is acceptable between two objects within a single classification volume, defining a plurality of volume shapes having diagonals corresponding to the maximum distance and a predetermined degree of symmetry, and stepping systematically through the options from the lowest degree of symmetry to a user selected limit to generate boundaries of the measurement volumes, to pack them together, to calculate the number required to fill a predetermined volume in the shade space and to check that voids are not formed, or that if they are their maximum spatial extent is below a predetermined threshold.

Preferably the solution yielding the minimum number of classification volumes is selected.

This may correspond to a maximal packing solution.

It may be acceptable to allow small voids in the packing space, as the objects which are identified as belonging to the void may then be assigned to a near classification volume on the basis of a probability function, for example by being assigned to the nearest classification volume.

The present invention will further be described, by way of example, with reference to the accompanying drawings, in which:

Figure 1 schematically illustrates the CIELAB colour classification scheme;

Figure 2 illustrates a first scatter pattern of measurements obtained during the first stages of a production process;

Figure 3 schematically illustrates the scatter pattern of Figure 2 further on into the production process and indicates how the shade space for shade A may be shifted to maximise the number of members belonging to that shade space;

Figure 4 schematically illustrates the further evolution of the scatter patterns shown in Figures 2 and 3 as the manufacturing process continues;

Figure 5 schematically illustrates the evolution of a production characteristic with time;

Figure 6 schematically illustrates the same evolution as that shown in Figure 5, but with a fixed square grid of classes so as to compare the number of shades defined in the scheme shown in Figure 6 with that defined in the scheme shown in Figure 5;

Figure 7 schematically demonstrates the change in area encompassed by different geometric shade class shapes;

Figure 8 schematically illustrates the number of hexagonal spaces required to substantially populate a two-dimensional shade space;

Figure 9 demonstrates the number of square classification spaces required to populate the same shade space as illustrated in Figure 8; and

Figure 10 is a view of a rhombic - dodecahedron which is a volume that packs optimally in a three dimensional space.

A tile's appearance is defined by the various individual measurements made in respect of its visual properties. Unlike simple colour measurement, more than three measurements may be required to define a tile's shade, and investigation has shown that up to ten or so independent measurements are required. For clarity, the following discussion will be limited to a measurement space containing two orthogonal measurements, since these can be represented and visualised on paper. Nevertheless it will be appreciated that these concepts can be extended easily to multidimensional measurement spaces.

All of the shade values that were measured need to be considered to define the position of the tile's shade in an N-dimensional shade space (where N is the number of shade measurements). If all of the measurements are linear, isotropic and orthogonal, then the appearance difference between two tiles remains equal to the magnitude of the distance between the two appearance points in this colour space, and is still equal to the square-root of the sum of the squares of the differences between the measurements of the individual components. Thus: $\Delta E = (a2-a1)^2 + (b2-b1)^2 + (c2-c1)^2 + (d2-d1)^2...)^{1/2}$ irrespective of the number of dimensions considered.

As with colour measurement, a single shade class can be defined by the co-ordinates of a central or target shade, and a radius defining the maximum difference from that target which is acceptable. The class is therefore a hypersphere in an N-dimensional space. It becomes possible to guarantee that no two appearances within this class are more than the given distance apart, which distance is equal to the diameter of the sphere.

The diameter d of the sphere is selected on a judgement that customers will be satisfied with a shade if any two tiles within the shade class always have an appearance difference of less than the diameter of the hypersphere. The diameter d is a user selected parameter.

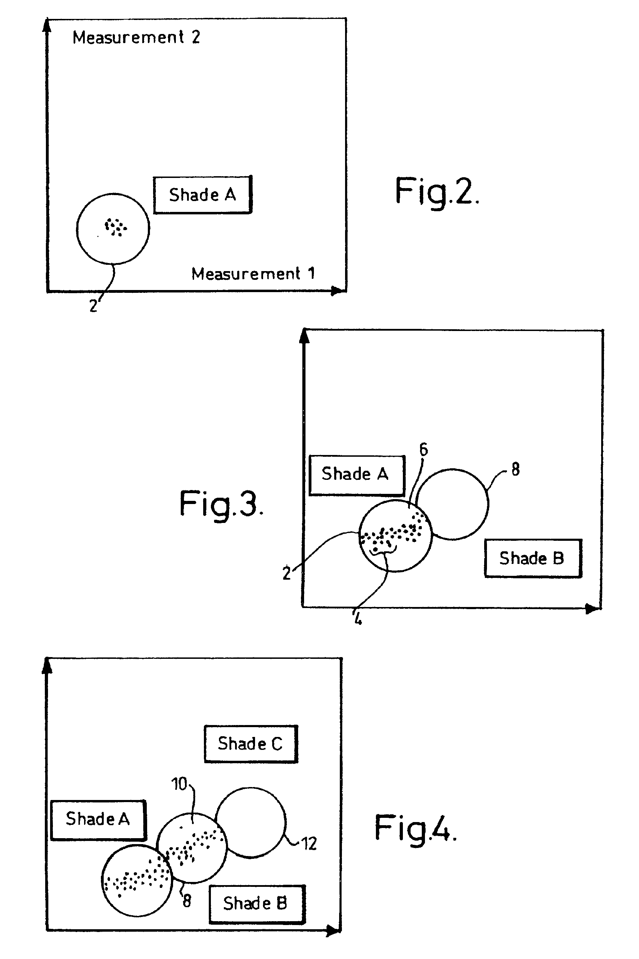

Suppose that it is acceptable for a manufacturer to create new shades on each production run. The manufacturer will commence the production process and the first series of tiles from the process have an average appearance and a limited amount of variation about this average. If these measurements are plotted, as shown in Figure 2, then the individual measurements are closely grouped together, and the manufacturer can then define a hypersphere (circle in two dimensions) 2 surrounding those appearances, which hypersphere 2 represents the limits of shade A. In this two-dimensional representation of Figure 2, the hypersphere is shown as a circle.

If the position of this hypersphere defining the shape boundary is static, then a new shade class would need to be defined as soon as any measurements differ from the centre point of this sphere by a distance $\frac{d}{2}$, which corresponds to the radius of the hypersphere.

It is quite probable that the shade of the tiles will drift slowly with time as the production run continues. In the example shown in Figure 3, the first tiles from the production run were grouped about a region 4 in the shade space whereas more recently produced tiles are clustered within a region 6 in the shade space. If the position of the hypersphere 2 were to remain fixed as shown in Figure 2, then those shades clustered in region 6 of Figure 3 would fall outside the boundary of shade A. However, in the method according to the present invention, the position of the hypersphere defining shade A is allowed to move in an attempt to continue classifying measurements into the hypersphere 2 defining shade A in order to delay the need to create a new shade. Thus in this example, the hypersphere 2 has drifted rightwardly and upwardly away from the origin of the measurement axes so as to maximise the number of tiles which fall within its class. In practice, a new shade, shade B, need not be created immediately as soon as it is no longer possible to fit it within the space defined by shade A, even after allowing that shade to drift, since tiles outside of the shade A class may be downgraded to a second or reject quality. However, when it is no longer possible for shade A to cover a predetermined number out of the most recently produced tiles, for example 90%, as well as those previously classified as shade A, then it is desirable to create a new shade, shade B. The data processor may alert an operator to seek confirmation that it can create a new shade.

Shade A and shade B are advantageously allowed to overlap. The degree of overlap may be selected as a function of the amount of scatter in directions perpendicular to the line joining the centres of shade A and shade B.

The sequence of events is then repeated with the hypersphere 8 defining shade B drifting around the hypersphere 2 defining shade A until the shades being currently produced from the production run are clustered in region 10 of the shade space, which, as shown in Figure 4 corresponds to the diagonally opposite side of the hypersphere 8 to region 6 of the shade space. It then becomes impossible for shade B to cover the shade points of the currently produced tiles, and consequently a new shade, shade C, has to be established as defined by the hypersphere 12.

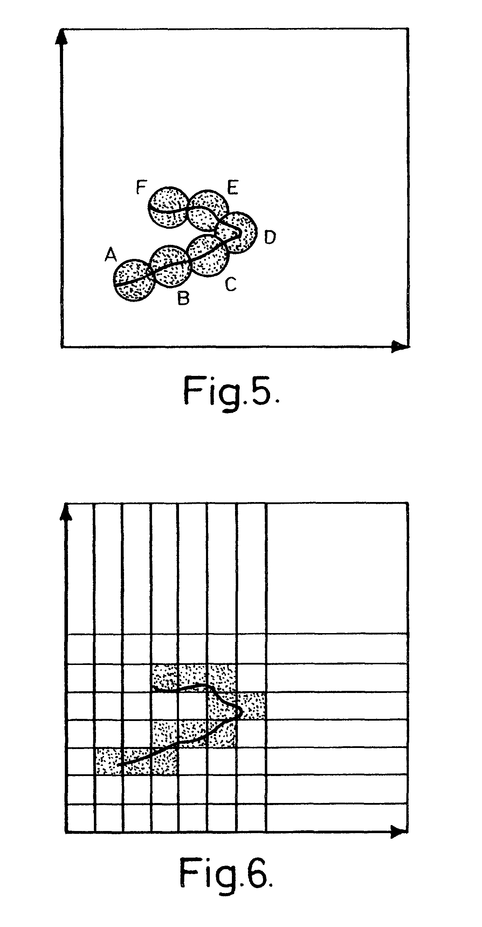

It will be appreciated that this process can continue, until, as shown in Figure 5, the evolution of the shade is encompassed by shades A to F. Thus Figure 5 illustrates a chain of slightly overlapping circles which follow the evolution of time of the mean shade.

Almost all of the tiles will have been classified into one of the six shades and no two tiles within the same shade are more than a distance in d apart in the shade space.

The choice of shape for the classification space is important. By way of comparison, Figure 6 schematically illustrates the same shade evolution as shown in Figure 5 but the shade (class) spaces are taken to be square. In order to meet the criteria that no two tiles within a single shade are more than a distance d apart, then the diagonal of the square must equal the diameter of the circles of Figure 5, and consequently the length of the side of the square is therefore

$$\frac{d}{\sqrt{2}}.$$

If a fixed grid of squares of this size is plotted over the same shade progression curve, we see that in this example 11 shades are required to define the various appearance produced in the production run, rather than the six illustrated in Figure 5. This example clearly demonstrates that the use of fixed shades is in theory, leading to an unduly large number of individual shades. This is true, in general, for all classification schemes.

The strategy of chaining together circular shades gives the minimum number of shades required to describe the variations found in the production run. Moreover, the strategy can be applied not only in two dimensions as illustrated, but also in one, three, four or more by chaining together hyper-spheres in an N-dimensional space.

The above shade classification scheme is not particularly suitable for use with a fixed shade scheme which must be replicated over many production runs. The shade curve will inevitably pass through the same area of shade space many times and the spherical shade classes will start to overlap. If the first established shades are left intact, then the later shades which are filling space around the earlier shades would become small and irregularly shaped. The arrangement of shades would no longer minimise the number of shades required and would also become disorganised and unclear, making it hard to manage.

This problem is caused by the fact that circles do not tile together in a plane, and spheres do not pack together to fill a three-dimensional volume. Similarly hyper-spheres do not pack together in an N-dimensional space in such a way as not to leave any voids between them. In order to overcome this problem it is necessary to pack the shade space in such a way that the classes completely fill the space without voids.

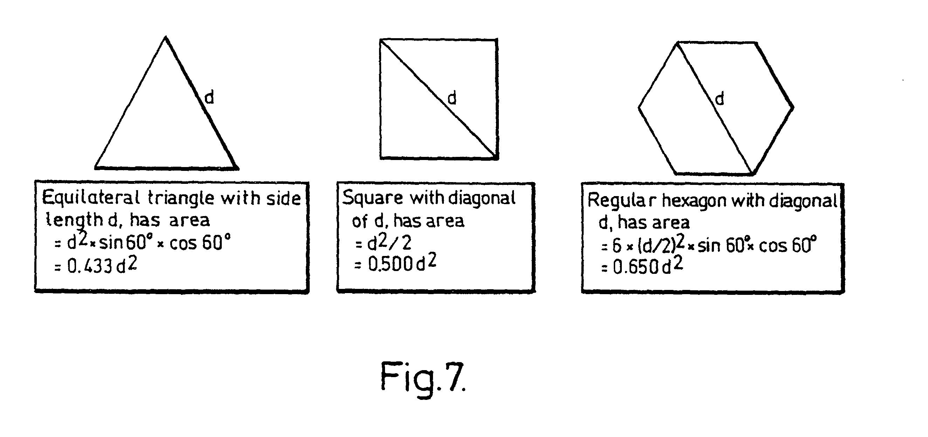

In two-dimensions, this problem is fairly straightforward as illustrated in Figure 7. As the shade space is isotropic, the shape will be symmetrical and have equal length sides ie a regular polygon. Only three of these shapes tile together without gaps, these are equilateral triangles with side length d, squares with diagonal length d, or regular hexagons with diagonal length d. The area enclosed by a triangle will be $0.433d^2$, whereas a square will enclose an area $0.5d^2$ and the regular hexagon will enclose an area $0.65d^2$. Thus given that the regular hexagon tiles together and encloses the most volume, this shape gives the minimum number of shade groups in order to pack a predetermined shade space. In other words, it is the optimal solution in two dimensions.

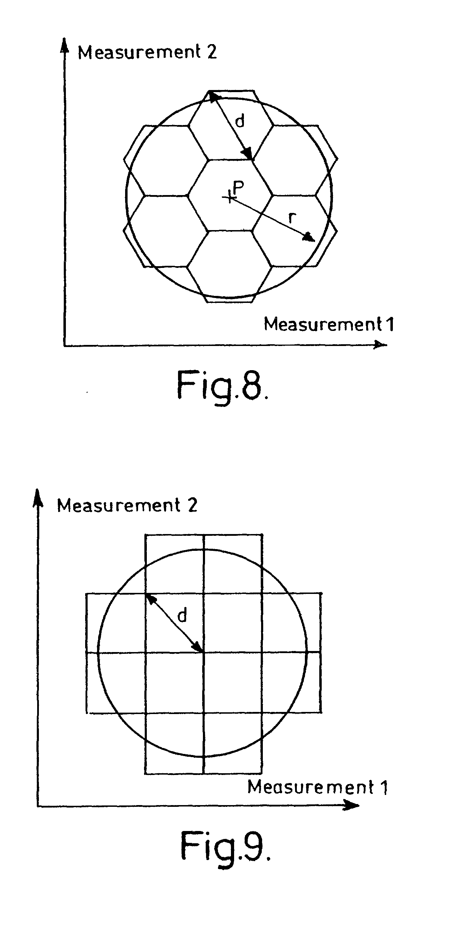

Figures 8 and 9 represent this schematically. In the general case where a central appearance for a product is defined by point P, and any shade must have tiles within that shade which are no more than a distance d apart, and, furthermore, to be acceptable a product of this type must not have an appearance which is more than a distance r from the central appearance P, then the shade space can be tiled with hexagons as shown in Figure 8, requiring the use of only seven shade classes to substantially define the entire shade space. However, use of squares, as shown in Figure 9, requires 12 shades to cover a similar proportion of the product shade space. Thus, the choice of a square shade space instead of a hexagonal shade space requires 30% more shade classes.

These concepts, as illustrated in the simple two-dimensional space can be extended into three and multidimensional spaces. The optimal packing solution in the three dimensional space is the rhombic dodecahedron, as illustrated in Figure 10. In this illustration the chain lines represent the interfaces between surfaces which are behind other surfaces in this view.

It is thus possible to define a shade classification method and packing scheme which seeks to minimise the number of shades required to define the number of shades required to define the production run.

The method according to the present invention can be embodied within a known inspection apparatus. Thus products from a production line may be conveyed to an inspection region where they are illuminated and an image of the product is captured by a camera and conveyed to a data-processor. The data-processor analyses the image to obtain the various independent parameters within the multidimensional measurement space, and then plots these within the measurement space in order to determine which of the shade groups the object belongs to. In the context of a classification scheme where shades are created for each production run, as described with reference to Figures 2 to 6 herein, the data-processor is also programmed to calculate and vary as appropriate the boundaries of the shade classification space or class.

**Claims**

1. A method of classifying objects so as to sort objects into classes, the method **characterised by** the steps of

    a. Making a measurement or assessment of at least one property of an object;

    b. Representing the measurement within a measurement space;

    c. Assigning the object to a first class;

    d. Defining a volume (2, 8) in the measurement space associated with the first class such that objects falling within the volume can be identified as belonging to the first class;

e. Making at least one further measurement of at least one further object;

f. Representing the at least one further measurement within the measurement space; and

g. If the further measurement outside of the first class, examining the position of the first class in the measurement space to see if moving the position of the first class within the measurement space will increase the number of objects belonging to the first class.

2. A method as claimed in claim 1, in which steps e, f and g are repeated for further measurements.

3. A method as claimed in claim 1 or 2, in which a new class is defined once movement of the or each existing class does not result in an increase in the number of objects belonging to the class.

4. A method as claimed in any one of the preceding claims, in which the classes are absolute.

5. A method as claimed in claim 4, in which the positions of the classes become fixed.

6. A method as claimed in any one of the preceding claims, in which a user can selectively fix the positions of classes within the classification space.

7. A method as claimed in any one of the preceding claims, in which classes can overlap.

8. A method as claimed in any one of the preceding claims, in which the shape of classes within the measurement space is optimised to reduce the number of groups required to fill a region of the measurement space.

9. A method as claimed in any one of the preceding claims, in which the or each measurement of an object is recorded in the measurement space in order to build a scatter pattern representing the distribution of objects.

10. A method as claimed in any one of the preceding claims in which the classes are moved by translational movement in the measurement space.

11. A method as claimed in any one of the preceding claims, in which the classes are moved by rotational movement within the measurement space.

12. A method as claimed in any one of the preceding claims, in which the maximum distance between two points in the measurement space, where those points are in the same class is a predetermined value.

13. A method as claimed in any one of the preceding claims, in which the shapes of the classes in the measurement space are multidimensional expressions of simple geometric shapes.

14. A method as claimed in claim 13, in which the shape of a classification volume is a hyper-sphere.

15. A method as claimed in any one of claims 1 to 12, in which the classification volume associated with a class is formed by intersecting hyper-planes.

16. A method as claimed in any one of the preceding claims 1 to 12, in which the shapes of classes are formed by defining the centre positions of a plurality of classes and allowing an envelope to grow outwardly until it abuts the envelope of a neighbouring class, the portions of the envelope continuing to grow until the entirety of the envelope surface touches the envelopes of its surrounding neighbours.

17. A method as claimed in any one of the preceding claims, in which the classes are defined by probability functions.

18. A measurement apparatus **characterised by** at least one input sensor for measuring at least one property of the object, and a data processor responsive to the at least one sensor for classifying the object in accordance with a method as claimed in any one of the preceding claims.

19. A method of packing classification volumes in a multidimensional space so as to minimise the number of volumes required whilst minimising the formation of voids between volumes, the method comprising the steps of defining a multidimensional space and a maximum permissible change of a parameter which is acceptable between two objects within a single volume, defining a plurality of volume shapes having diagonals corresponding to the maximum distance and a predetermined degree of symmetry, and stepping symmetrically through the options from the lowest degree of symmetry to a user selected limit to generate boundaries of the volumes, to pack them together, to calculate the number required to fill a predetermined volume of the shade space and to check that voids are not formed, or that if voids are formed their maximum spatial extent is below a predetermined threshold.

FIG.1.

Fig.10.

Measurement 2

Shade A

Fig.2.

Measurement 1

2

Fig.3.

Shade A

6

8

Shade B

2

4

Shade C

10

Shade A

12

Fig.4.

8

Shade B

Fig.5.

Fig.6.

Equilateral triangle with side length d, has area
$$= d^2 \times \sin 60° \times \cos 60°$$
$$= 0.433\, d^2$$

Square with diagonal of d, has area
$$= d^2 / 2$$
$$= 0.500\, d^2$$

Regular hexagon with diagonal d, has area
$$= 6 \times (d/2)^2 \times \sin 60° \times \cos 60°$$
$$= 0.650\, d^2$$

Fig. 7.

Fig.8.

Fig.9.